# EUROPÄISCHE PATENTSCHRIFT

(11) **EP 1 694 928 B1**
(45) Veröffentlichungstag und Bekanntmachung des Hinweises auf die Patenterteilung: **28.05.2008**
(21) Anmeldenummer: 04802688.4
(22) Anmeldetag: 05.11.2004
(51) Int. Cl.: E04D 11/02, E04F 15/18, E04F 15/08

(54) **MEHRSCHICHTIGES ENTKOPPLUNGS- UND ABDICHTUNGSSYSTEM**
MULTI-LAYER DECOUPLING AND SEALING SYSTEM
SYSTEME MULTICOUCHE DE DESOLIDARISATION ET D'ETANCHEIFICATION

(30) Priorität: 06.11.2003 DE 20317248 U; 01.06.2004 DE 102004026652
(43) Veröffentlichungstag der Anmeldung: 30.08.2006
(60) Teilanmeldung: 07011250.3
(73) Patentinhaber: Blanke Gmbh & Co. Kg, 58642 Iserlohn (DE)
(72) Erfinder: THRONICKE, Sandro, Gerd, 44532 Lünen (DE); BLANKE, Peter, Willhelm, 58642 Iserlohn (DE)
(74) Vertreter: Schneider, Uwe
(86) Internationale Anmeldenummer: PCT/DE2004/002470
(87) Internationale Veröffentlichungsnummer: WO 2005/045153

(56) Entgegenhaltungen:
- EP-A- 0 386 324
- WO-A-99/54571
- DE-C1- 10 060 751
- DE-U1- 8 814 650
- FR-A- 2 774 715

## Beschreibung

Die Erfindung betrifft ein mehrschichtiges Entkopplungs- und Abdichtungssystem, insbesondere für die Verlegung keramischer Beläge im Dünnbettverfahren, gemäß Oberbegriff des Anspruches 1.

Keramische Beläge und insbesondere Fliesen werden heute üblicherweise im sogenannten Dünnbettverfahren verlegt, bei dem die keramischen Beläge In eine dünne Kleberschicht aus einem Fliesenmörtel verlegt werden. Dieses im Innenbereich zufriedenstellende Verfahren weist jedoch bei der Verarbeitung von keramischen Belägen im Außenbereich insofern Probleme auf, als die Feuchtlgkeitsbelastung und die Temperaturbelastung derartiger Beläge nicht selten zu schleichender Zerstörung der Diesen bzw. deren Verlegungsuntergründe führt, wodurch geringe Haltbarkeitszeiten derartiger Beläge nicht zu vermeiden sind und für die Sanierung hohe Kosten entstehen können. Auch führt durch den Fliesenbelag in den Untergrund eingedrungene Feuchtigkeit häufig zu Schäden am Bauwerk selbst, da die Feuchtigkeit nicht mehr frei entweichen kann. Dies ist besonders häufig bei Balkonabdichtungen festzustellen.

Auch ist durch die teilweise deutlich unterschiedlichen Ausdehnungskoeffizienten von Untergrund, Dünnbettmörtel und keramischem Belag durch die im Außenbereich auftretenden sehr hohen Temperaturdifferenzen zwischen hohen Temperaturen aufgrund Sonneneinstrahlung und niedrigeren Temperaturen bei Frost das Rißverhalten des keramischen Belages und des Untergrundes schwierig zu beherrschen. Es kommt daher häufig zu Rissen im Fliesenbelag, wenn der Fliesenbelag fest mit dem Untergrund verbunden wird.

Es ist daher schon vielfach vorgeschlagen worden, derartige im Außenbereich verlegte keramische Beläge dadurch haltbarer verlegen zu können, daß eine gezielte Entkopplung zwischen dem keramischen Belag und dem Unterbau herbeigeführt wird. Ein solches Entkopplungssystem sorgt zwar für die mechanische Entkopplung quer zur Verlegefläche, hat jedoch häufig den Nachteil, daß die mechanische Belastbarkeit des Fliesenbelages und des Entkopplungssystems nicht zufriedenstellend ist. Einerseits ist die Verankerung der Fliesen an dem Entkopplungssystem nicht hinreichend fest, andererseits ist die Druckfestigkeit des Entkopplungssystems selbst nicht optimal.

Eine derartige Gestaltung eines Entkopplungs- und Abdichtungssystems ist aus der DE 100 60 751 C1 bekannt. Bei dieser Gestaltung wird ein Abdichtungs- und Dralnagesystem vorgeschlagen, das unterseitig eine Kunststoff- oder Bitumenschlcht aufweist, über der eine erste Vliesschicht aus einem ersten hydrophoben Polymer, darüber eine Drainageschicht aus einem zweiten hydrophoben Polymer und wiederum darüber eine zweite Vliesschicht aus dem ersten hydrophoben Polymer angeordnet sind. Dieser Schichtaufbau erlaubt zwar in gewissen Grenzen eine Abführung eingedrungener Feuchtigkeit aus dem Unterbau einer Fliesenschicht, doch ist die mechanische Belastbarkeit eines derartigen Schichtaufbaus nicht zufriedenstellend, da die Einbettung der obersten Vliesschicht in den Fliesenmörtel keine hinreichende Verankerungsfunktion bzw. Bewehrungsfunktion erlaubt. Die Drainageschicht ist hierbei als eine gitterartige Schicht ausgebildet, ohne das genaue Angaben zur Ausbildung der gitterartigen Schicht gemacht werden.

Aus der EP 0 386 324 A2 ist ein bituminöser Haftvermittler bekannt, der auf einer Bitumen-Trägerschicht eine vllesartige Schicht aufkaschiert hat, auf der wiederum ein gitterartiges Gewebe als Armierungsschicht zu besseren Befestigung eines Zementmörtels für eine darauf aufzubringende Fleisenschicht aufweist

Aus der FR 2 774 715 A1 ist wie auch aus der DE 88 14 650.2 ein Schichtaufbau zur Rissüberbrückung mit einer gitterartigen Armierungsstruktur zur Einbettung von Fliesenmörtel bekannt.

Aufgabe der vorliegenden Erfindung ist es daher, ein gattungsgemäßes mehrschichtiges Entkopplungs- und Abdichtungssystem derart weiterzubilden, daß eine Verbesserung der mechanischen Belastbarkeit und der Verankerung an der Fliesenschicht erreichbar ist.

Die Lösung der erfindungsgemäßen Aufgabe ergibt sich aus den kennzeichnenden Merkmalen des Anspruches 1 in Zusammenwirken mit den Merkmalen des Oberbegriffes. Weitere vorteilhafte Ausgestaltungen der Erfindung ergeben sich aus den Unteransprüchen.

Die Erfindung beschreibt ein mehrschichtiges Entkopplungs- und Abdichtungssystem, insbesondere für die Verlegung keramischer Beläge im Dünnbettverfahren, mit einer flüssigkeitsundurchlässigen Abdichtungsschicht, wobei über der flüssigkeitsundurchlässigen Abdichtungsschicht aus einem Verankerungsvlies oder aus einer Polymer-Abdichtungsschicht mit beidseitig angeordnetem Verankerungsvlies eine aus einem gitterartigen Strukturelement gebildete Verankerungsschicht für die Einbringung einer im Bereich der Oberseite des Entkopplungs- und Abdichtungssystems einzubringenden, bei der Verarbeitung plastischen und danach innerhalb der Verankerungsschicht aushärtenden Verfüllmasse angeordnet ist, wobei über der Verankerungsschicht eine Armierungsschicht zumindest abschnittsweise fest angeordnet ist Hierbei ist insbesondere durch die oberseitig angeordnete Verankerungsschicht und die darüber aufgelegte und damit befestigte Armleningsschicht dafür gesorgt, daß ein oberseitig eingebrachter Fugenmörtel sich vollständig mit dem Entkopplungs- und Abdichtungssystem verbindet und dabei dafür sorgt, daß eine entsprechende Belastbarkeit des Entkopplungs- und Abdichtungssystems erzielt wird. Das gitterartige Strukturelement erlaubt hierbei einen besonders einfachen Aufbau der Im wesentlichen die Dicke des Entkopplungs- und Abdichtungssystems bestimmenden Verankerungsschicht. Die Abdichtungsschicht sorgt dabei für eine entsprechende feuchtlgkeitsundurchlässige Abdichtung gegenüber einem Untergrund am Einbauort und im Falle einer schwimmenden Verlegung auch für eine mechanische Entkopplung.

In einer ersten Ausgestaltung kann vorgesehen werden, daß das gitterartige Stmkturelement aus stabförmig gitterartig zueinander angeordneten und aneinander an den Kreuzungspunkten des Gitters festgelegten Einzelstäben gebildet ist. Ein derartiges gitterartiges Strukturelement läßt sich einfach aus gleichartig vorfertigbaren Einzelstäben herstellen und man kann daher etwa kostengünstig extrudierte Einzelstäbe verarbeiten, die auf Trommeln aufgewickelt und für das Herstellen der gitterartigen Strukturelemente jeweils zueinander positioniert werden. Damit Ist die Herstellung eines solchen gitterartigen Strukturelementes sehr kostengünstig und einfach. Anders als bei bekannten Entkopplungs- und Abdichtungssystem müssen keine aufwendigen Werkzeuge gefertigt werden, die zueinander abgewinkelte oder sonstwie verformte Bereiche herstellen. Hierbei kann in weiterer Ausgestaltung dafür gesorgt werden, daß die Einzelstäbe des gitterartigen Strukturelementes eine im wesentlichen rechteckige Querschnittsform aufweisen. Insbesondere wenn die Einzelstäbe ungleichförmige Abmessungen ihrer Kanten aufweisen, läßt sich die Dicke der gitterartigen Strukturelemente einfach verändern und an unterschiedliche Bedürfnisse anpassen.

Von besonderem Vorteil ist es, wenn die sich kreuzenden Einzelstäbe des gitterartigen Strukturelementes so angeordnet sind, daß eine erste Schicht aus jeweils gleich orientierten Einzelstäben unterhalb einer zweiten Schicht aus dazu in einem Winkel angeordneten, jeweils zueinander gleich orientierten Einzelstäben besteht. Somit entfällt bei der Herstellung des gitterartigen Strukturelementes die Notwendigkeit, die Einzelstäbe wie bei textilen Geweben jeweils zueinander zu verschränken, was die Herstellung weiter vereinfacht und zum anderen dafür sorgt, daß die gleichartigen Schichten der unteren und der oberen Lage der Einzelstäbe zwischen sich Jeweils entsprechende Freiräume bilden, die für die Einbringung der Verfüllmasse genutzt werden können. Es ist hierbei denkbar, daß die gitterartige Struktur aus den Einzelstäben eine Rauten-, Rechteck- oder Quadratform aufweist. Auch andere geometrische Muster sind selbstverständlich denkbar.

Eine weitere Vereinfachung der Herstellung der Verankerungsschicht läßt sich erreichen, wenn die Einzelstäbe der beiden Schichten miteinander im Kreuzungsbereich unter mechanischem Druck verschweißt sind. Etwa kann durch Aufheizen der durch Temperatureinfluß plastisch verformbaren Einzelstäbe dafür gesorgt werden, daß im Berührungsbereich der Einzelstäbe eine Erweichung und ein Verschweißen mit dem jeweils darunter liegenden Einzelstab erfolgt und sich damit ein mattenartiger Verbund der Einzelstäbe ergibt

Weiterhin ist es denkbar, daß etwa bei einem Verschweißen der Einzelstäbe die Einzelstäbe des gitterartigen Strukturelementes zu mindestens an den Kreuzungspunkten zueinander verkippte Kantenbereiche aufweisen, wodurch sich hinterschnittene Abschnitte an den Einzelstäben bilden. Durch das plastische Umformen der Einzelstäbe Im Bereich der Kreuzungspunkte durch Temperatureinfluß kommt es dazu, daß die Einzelstäbe durch den mechanischen Druck ein wenig verformt werden und dadurch ihre Ausrichtung abhängig von der Lage des mit dem Einzelstab zu verbindenden anderen Einzelstabes verändern. Dies führt dazu, daß sich Hlnterschneldungen bilden, die etwa für die Verankerung in der Verfüllmasse von besonderem Vorteil sind. Die Verfüllmasse dringt aufgrund ihrer Plastizität bei der Verarbeitung in diese Hinterschneidungsbereiche ein und kann nach dem Aushärten sich wesentlich besser an der Verankerungsschicht durch die Hinterschnitte der Einzelstäbe festhalten.

Von weiterem Vorteil Ist es, wenn zwischen jeweils der ersten und der zweiten Schicht aus Einzelstäben eine durchgehende Dampfdruckausgleichsschicht angeordnet wird. Eine solche Dampfdruckausgleichsschicht, die etwa aus einer Polyethylenfolie gebildet sein kann, dient zu einer weiteren Abdichtung des Untergrundes, läßt gleichzeitig in grundsätzlich bekannter Weise aber ein Abdampfen von Feuchtigkeit aus dem Untergrund zu. Diese Dampfdruckausgleichsschicht kann bei der Herstellung des Verbundes der beiden Scharen der Einzelstäbe zwischen diese Schichten mit eingelegt und durch Verschweißen gleichzeitig fest mit den Einzelstäben verbunden werden. Dadurch ist eine besonders einfache Herstellung gewährleistet.

Weiterhin ist es in anderer Ausgestaltung denkbar, daß die Armierungsschicht auf der Verankerungsschicht aufgeschweißt oder auch aufgeklebt ist. Hierdurch kann die Armierungsschicht zum einen gut In die Verfüllmasse eingebettet werden, zum anderen hängt sie fest an der Verankerungsschicht, die ebenfalls mit der Verfüllmasse ausgefüllt wird. Damit ergibt sich ein besonders guter Verbund zwischen der Verfüllmasse und der Armierungsschicht bzw. der Verankerungsschicht. Es ist hierbei denkbar, daß die Armierungsschicht als ein gitterartiges Gewebe gebildet ist, vorzugsweise als ein Glasfasergewebe, das zur sicheren Verankerung mit der oberseltig des Entkopplungs- und Abdichtungssystems einzubringenden Verfüllmasse dient.

Von Vorteil für die Verarbeitung größerer Flächen des Entkopplungs- und Abdichtungssystems ist es, wenn die Armierungsschicht sich zu mindestens in einzelnen Randbereichen des Entkopplungs- und Abdichtungssystems über die anderen Schichten hinaus erstreckt, um einen Übergang zu anderen Abschnitten des Entkopplungs- und Abdichtungssystems zu schaffen. Hierdurch kann ein entsprechend überlappter Anschluß an den Rändern etwa einzeln verarbeitbarer Bahnen erreicht werden, der keinerlei Festigkeitsverlust an den Übergangsbereichen zwischen benachbarten Bahnen mit sich bringt.

Weiterhin ist es denkbar, daß das Entkopplungs- und Abdichtungssystem lose auf einem Untergrund verlegbar ist. Hierdurch wird eine vollständige mechanische Entkopplung etwa eines aufgebrachten Fliesenbelages vom jeweiligen Untergrund erreicht, der etwa bei stark unterschiedlichen Temperatur-Ausdehnungskoeffizienten oder arbeitenden Untergründen wie etwa Holzböden notwendig ist

In einer anderen Ausgestaltung ist es denkbar, daß das Entkopplungs- und Abdichtungssystem fest. vorzugsweise verklebt auf einem Untergrund verlegbar ist. Hierdurch wird eine sichere Befestigung des Entkopplungs- und Abdichtungssystems erreicht, wenn dies durch die Eigenschaften des Untergrundes zulässig und sinnvoll ist.

Bei der Erfindung ist die Abdichtungsschicht aus einem feuchtigkeitsundurchlässigen Verankerungsvlies gebildet. Ein solches Verankerungavlies verbindet sich aufgrund seiner Struktur besonders gut mit dem Untergrund und ist an sich grundsätzlich bekannt.

In einer anderen, alternativen Ausgestaltung besteht zur Erhöhung der Abdichtungswirkung die Abdichtungsschicht aus einer Polymer-Abdichtungsschicht, insbesondere aus einer Polyethylen-Abdichtungsschicht, die grundsätzlich schon bekannt ist. Dabei weist die Abdichtungsschicht beidseitig ein Vliesgewebe zur Verankerung mit dem Untergrund, vorzugsweise zur Verankerung in einem Kleber bei fester Verlegung auf.

Von Vorteil für die Abdichtung auch größerer Flächen ist es dabei, wenn die Abdichtungsschicht sich zu mindestens In einzelnen Randbereichen des Entkopplungs- und Abdichtungssystems über die anderen Schichten hinaus erstreckt, um einen feuchtigkeitsundurchlässigen Übergangsbereich zu anderen Abschnitten des Entkopplungs- und Abdichtungssystems zu schaffen. Damit kann im Bereich der Überlappung ein feuchtigkeitsdichter Anschluß an benachbart verlegte Bahnen erreicht werden.

Hinsichtlich der Abmessungen der einzelnen Schichten des Entkopplungs- und Abdichtungssystems ist es denkbar, daß die Dicke der Verankerungsschicht zwischen 2 und 6 Millimetern und damit in einer Ausgestaltung die Gesamtdicke des Entkopplungs- und Abdichtungssystems im wesentlichen zwischen 2 und 8 Millimetern beträgt. Hierdurch trägt das Entkopplungs- und Abdichtungssystem nicht wesentlich relativ zu einem vorgegebenen Untergrund auf und kann auch bei räumlichen knappen Einbauverhältnissen unproblematisch eingesetzt werden.

Es ist von wesentlichem Vorteil für die Benutzungselgenschaften des erfindungsgemäßen Entkopplungs- und Abdichtungssystems, wenn die Verankerungsschicht nach dem Einbringen der Verfüllmasse im wesentlichen vollständig mit der Verfutimasse ausgefüllt ist und die in die ausgehärtete Verfüllmasse eingebettete Armierungsschicht eine Versteifungs- und Bewehrungsfunktion für die Abtragung von oberhalb eingeleiteter mechanischer Belastungen erfülft. Damit wird die Lastabtragung über wesentlich größere Schichtdicken als bei bekannten Entkopplungs- und Abdichtungssystemen möglich, da zusätzlich noch die ganze Schichtdicke der Verankerungsschicht bei mechanischen Belastungen mitträgt und gleichzeitig durch die Armierungsschicht verstärkt ist.

In einer weiteren Ausgestaltung kann das Entkopplungs- und Abdichtungssystem als Fassadenelement mit Hinterlüftung ausgestaltet werden, wodurch die Festlegbarkeit von z.B. keramischen Belägen im Fassadenbereich wesentlich verbessert werden kann.

Weiterhin ist es denkbar, daß das Entkopplungs- und Abdichtungssystem als Dämmelement, insbesondere aus Polystyrol, z.B. auch für die Verwendung im Fassadenbereich ausgestaltet wird.

Die erfindung wird anhand der beigefügten Zeichnungen näher beschrieben.

Es zeigen:
- Figur 1 -: einen Schnitt durch ein erstes erfindungsgemäßes Entkopplungs- und Abdichtungssystem zur Erläuterung des Schichtaufbaus,
- Figur 2 -: eine Draufsicht auf ein erfindungsgemäßes Entkopplungs- und Abdichtungssystem gemäß Figur 1,
- Figur 3 -: Anordnung von Überlappungsbereichen für Armierungsschicht und Abdichtungsschicht an einem erfindungsgemäßes Entkopplungs- und Abdlchtungssystem gemäß Figur 1.
- Figur 4 -: einen anderen Schichtaufbau eines zur Erfindung ähnlichen Entkopplungs- und Abdichtungssystems ohne zwischengelegte Dampfdruckausgleichsschicht und unterseitig nur mit einem Verankerungsvlies.

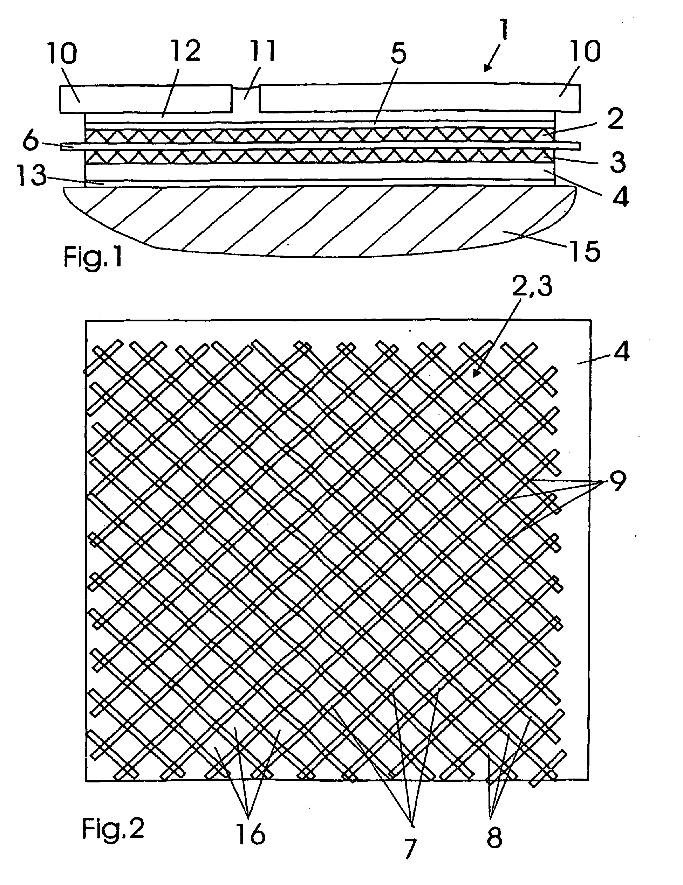

Bei den in den Figuren 1 bis 3 dargestellten Systemen ist die Abdichtungsschicht vereinfacht als eine einzelne Schicht dargestellt, wobei die Abdichtungsschicht alternativ entweder aus einem Verankerungsvlies oder aus einer Polymerschicht mit beidseitig angeordnetem Verankerungsvlies gebildet ist.

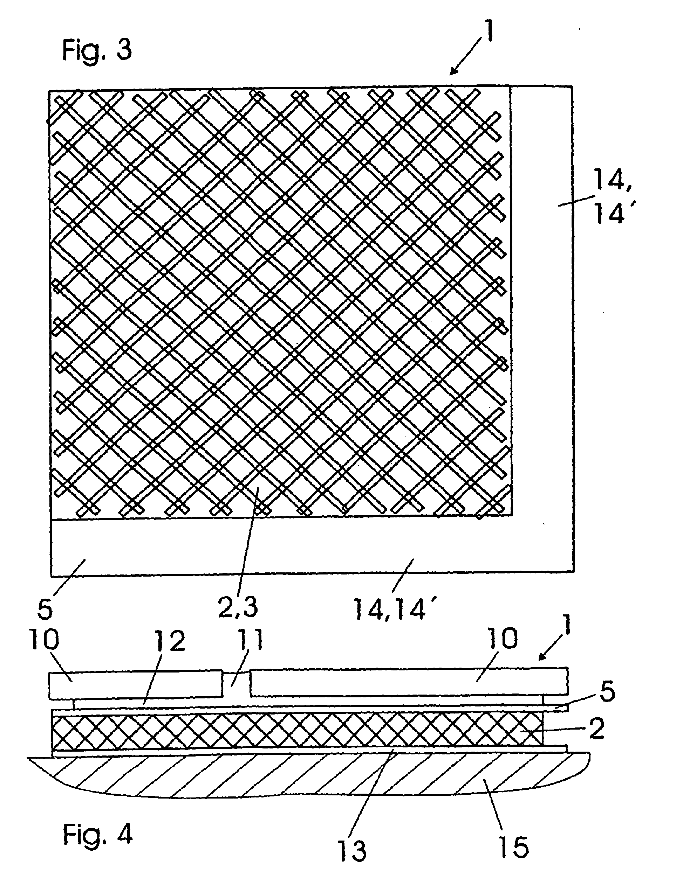

In der Figur 1 ist in einer geschnittenen Seitenansicht der Schichtaufbau eines ersten erfindungsgemäßen mehrschichtigen Entkopplungs- und Abdichtungssystems 1 aufgezeigt, wobei in der Figur 2 eine geschnittene Draufsicht etwa in Höhe einer Abdichtungsschicht 4 zu erkennen ist und in der Figur 3 eine Draufsicht auf das Entkopplungs- und Abdichtungssystem 1 geschnitten entlang der Armierungsschicht 5 dargestellt ist. Das Entkopplungs- und Abdichtungssystems 1 ist in der Figur 1 im Einbauzustand auf einem Untergrund 15, etwa einem Zementestrich oder dergleichen dargestellt, wobei oberhalb des Entkopplungs- und Abdichtungssystems 1 ein Fliesenbelag aus Fliesen 10 zu erkennen ist, der im Dünnbettverfahren in einem Fliesenmörtel 12 verlegt ist, wobei die Fugen 11 zwischen den einzelnen Fliesen 10 ebenfalls mit dem Fliesenmörtel 12 ausgefüllt sind.

Das erfindungsgemäße Entkopplungs- und Abdichtungssystem 1 besteht dabei aus einer auf dem Untergrund 15 aufliegenden Abdichtungsschicht 4, die beispielsweise aus einem Polyethylen gebildet ist und als Bahn bestimmter Breite verlegt werden kann. Die Abdichtungsschicht 4 kann dabei mit dem Untergrund 15 verklebt sein, ebenfalls ist es denkbar, zur Entkopplung von Untergrund 15 und Fliesenbelag aus den Fliesen 10 die Abdichtungsschicht 4 auf dem Untergrund 15 nur schwimmend aufzulegen. Derartige Veriegeverfahren sind grundsätzlich bekannt und sollen daher hier nicht weiter behandelt werden.

Oberhalb dieser Abdichtungsschicht 4 ist eine Verankerungsschicht 2, 3 aus einer noch später erläuterten gitterartigen Struktur mit der Abdichtungsschicht 4 verbunden. Die Verbindung kann beispielsweise durch Verkleben oder Verschweißen in grundsätzlich bekannter Welse abhängig von den verwendeten Materialien erfolgen. Diese Verankerungsschicht 2, 3 ist aus zwei einzelnen Schichten 2, 3 gebildet, zwischen denen eine Dampfdruckausglelchsschlcht 6 in noch näher beschriebener Weise angeordnet werden kann.

Die Verankerungsschicht 2, 3 ebenso wie die mit ihr verbundene und oberhalb angeordnete Armierungsschicht 5 dient zur Verankerung des Entkopplunge- und Abdichtungssystems 1 an dem Fliesenmörtel 12 und damit der Schicht aus den Fliesen 10. Die Armierungsschicht 5 kann beispielsweise im grundsätzlich bekannter Welse aus einem gitterartig angeordneten Glasfasergewebe bestehen, das entsprechende Öffnungen und freie Bereiche aufweist, damit der Fliesenmörtel 12 möglichst tief in die Verankerungsschicht 2, 3 eintreten kann. Die Verankerungsschicht 2, 3 weist dabei in noch näher beschriebener Welse Aufnahmeräume 16 für den Fliesenmörtel 12 auf und dient damit zur Verbesserung der Verankerung des Fliesenmörtels 12 an dem mehrschichtigen Entkopplungs- und Abdichtungssystem 1.

Die Festlegung der Fliesenschicht aus den Fliesen 10 erfolgt hierbei dadurch, daß der Fliesenmörtel 12 vor dem Auflegen der Fliesen 10 oberseitig auf die Armierungsschicht 5 aufgebracht und mit einer Kelle möglichst tief durch die Öffnungen der Armierungsschicht 5 in die Verankerungsschicht 2 bzw. 3 bei Fehlen der optionalen Dampfdruckausgleichsschicht 6 hinein gedrückt wird, ist die Dampfdruckausgleichsschicht 6 vorhanden, so wird nur die Verankerungsschicht 2 von dem Fliesenmörtel 12 ausgefüllt. Der im plastischen Zustand verarbeitete Fliesenmörtel 12 füllt hierbei die Aufnahmeräume 16 In der Verankerungsschicht 2, 3 weitgehend aus und umfließt dabei die in noch näher beschriebener Weise gebildeten Einzelstäbe 7, 8 der Verankerungsschicht 2, 3 nahezu vollständig. Nach dem Aushärten des Fliesenmörtels 12 hat sich ein sehr fester Verband zwischen der Verankerungsschicht 2, der Armierungsschicht 5 und dem Fliesenmörtel 12 gebildet, der zum einen die Fliesen 10 fest an dem Entkopplungs- und Abdichtungssystem 1 verankert und zum anderen eine stabile, plattenartigen Ausgestaltung der Verankerungsschicht 2, 3 hervorruft. Dadurch ist das Entkopplungs- und Abdichtungssystem 1 besonders gut belastbar durch oberseitig der Fliesen 10 aufgebrachte mechanische Belastungen.

Die gitterartige Struktur der Verankerungsschicht 2, 3 wird hierbei aus unter einem Winkel zueinander angeordneten Einzelstäben 7, 8 gebildet, die übereinander angeordnet eine zweilagige Schichtanordnung aus den Schichten 2 und 3 bilden. Die Einzelstäbe 7, 8 weisen jeweils einen etwa rechteckigen Querschnitt auf und sind an den Kreuzungspunkten 9 etwa durch thermische Verfahren miteinander verschweißt. Hierdurch bildet sich auf einfachste Weise eine Übereinanderordnung von etwa parallele Scharen der Elnzelstäbe 7, die mit ebenfalls parallelen Scharen der Einzelstäbe 8, die unter einem Winkel zu der Schar der EInzeistäbe 7 liegen, verbunden sind. Zwischen den Einzelstäben 7 bzw. 8 bilden sich die Aufnahmeräume 16 in der Verankerungsschicht 2, 3.

Die gitterartige Struktur aus den Einzelstäben 7, 8 hat weiterhin den Vorteil, daß im Bereich der Kreuzungspunkte 9 beim Verschweißen der Einzelstäbe 7, 8 sich Bereiche an den Einzelstäben 7, 8 bilden, die Hinterschnitte aufweisen und daher zu einer sehr starken Verklammerung des in diese Bereiche eintretenden Fliesenmörtels 12 mit den Einzelstäben 7, 8 nach dem Erhärten führen.

Wenn größere Flächen verarbeitet werden sollen, empfiehlt es sich, sowohl die Armierungsschicht 5 als auch die Abdichtungsschicht 4 in Überlappungsbereichen 14, 14 soweit über die Berandung der gitterartigen Verankerungsschicht 2, 3 hinüber ragen zu lassen, daß sie mit benachbart anzuordnenden entsprechenden Schichten überlappend etwa verklebt oder sonstwie an diesen befestigt werden können.

Es versteht sich von selbst, daß die in den Figuren 2 und 3 aufgezeigte Anordnung der Einzelstäbe 7, 8 nur beispielhaft anzusehen ist und sich jegliche Art von geometrischen Mustern aus solchen Einzelstäben 7, 8 bilden lassen, die von Vorteil für die Eigenschaften des hier genannten Entkopplungs- und Abdichtungssystems 1 ist.

Zwischen die beiden Schichten 2 und 3 der Verankerungsschicht kann eine zusätzliche Dampfdruckausgleichsschicht 6 eingelegt sein, die direkt bei der Herstellung der gitterartigen Struktur der Verankerungsschicht 2, 3 mit eingebracht werden kann. Hierdurch kann auch eine besonders einfache und sichere Festlegung der Dampfdruckausgleichsschicht 6 in dem Schichtaufbau des Entkopplungs- und Abdichtungssystems 1 erfolgen. Derartige Dampfdruckausgleichsschichten 6 sind grundsätzlich bekannt und sollen daher hier nicht näher erläutert werden.

Unterhalb der Abdichtungsschicht 4 kann in grundsätzlich bekannter Weise eine Vliesschicht 13 vorgesehen werden, die auf die Abdichtungsschicht 4 aufkaschiert oder in sonst bekannter Weise an der Abdichtungsschicht 4 befestigt Ist und für den Fall des Verklebens der Abdichtungsschicht 4 mit dem Untergrund 15 eine besonders gute Befestigung am Untergrund 15 etwa über einen Mörtel oder Kleber erlaubt.

In der Figur 4 ist ausschließlich zur Erleichterung des Verständnisses der Erfindung eine andere Ausgestaltung eines ähnlichen Entkopplungs- und Abdichtungssystems 1 dargestellt, bei der die Dampfdruckausgieichsschicht 6 nicht vorhanden ist und anstelle der Abdichtungsschicht 4 nur eine Vliesschicht 13 zur Auflage auf dem Untergrund 15 vorgesehen ist Hierdurch kann für nicht feuchtlgkeitsempflndliche Untergründe 15, etwa bauwerksseitig dichte Untergründe 15 der Aufbau des Entkopplungs- und Abdichtungssystems 1 weiter vereinfacht werden, ohne daß die Entkopplungswirkung darunter leidet. Ansonsten gelten für die Eigenschaften der Schichten die vorstehend gemachten Angaben in entsprechender Weise.

### Sachnummernliste

- 1 -: Entkopplungs- und Abdichtungssystem
- 2 -: Verankerungsschicht
- 3 -: Verankerungsschicht
- 4 -: Abdichtungsschicht
- 5 -: Armierungsschicht
- 6 -: Dampfdruckausgleichsschicht
- 7 -: Einzelstab
- 8 -: Einzelstab
- 9 -: Kreuzungsbereich
- 10 -: Fliese
- 11 -: Fuge
- 12 -: Fliesenmörtel
- 13 -: Verankerungsvlies
- 14 -: Überlappungsbereich
- 15 -: Untergrund
- 16 -: Aufnahmeräume

## Patentansprüche

1. Mehrschichtiges Entkopplungs- und Abdichtungssystem (1), insbesondere für die Verlegung keramischer Beläge (10) im Dünnbettverfahren (12), mit einer flüssigkeitsundurchlässigen Abdichtungsschicht (4), wobei über der flüssigkeitsundurchlässigen Abdichtungsschicht (4) eine aus einem gitterartigen Strukturelement gebildete Verankerungsschicht (2, 3) für die Einbringung einer im Bereich der Oberseite des Entkopplungs- und Abdichtungssystems (1) einzubringenden, bei der Verarbeitung plastischen und danach innerhalb der Verankerungsschicht (2, 3) aushärtenden Verfüllmasse (12) angeordnet ist, **dadurch gekennzeichnet, dass** die Abdichtungsschicht (4) aus einem Verankerungsvlies oder aus einer Polymer-Abdichtungsschicht (4) mit beidseitig angeordnetem Verankerungsvlies besteht, und dass über der Verankerungsschicht (2, 3) eine Armierungsschicht (5) zumindest abschnittsweise fest angeordnet ist.

2. Entkopplungs- und Abdichtungssystem (1) gemäß Anspruch 1, **dadurch gekennzeichnet, daß** das gitterartige Strukturelement (2, 3) aus stabförmig gitterartig zueinander angeordneten und aneinander an den Kreuzungspunkten (9) des Gitters festgelegten Einzelstäben (7, 8) gebildet ist.

3. Entkopplungs- und Abdichtungssystem (1) gemäß Anspruch 2, **dadurch gekennzeichnet, daß** die Einzelstäbe (7, 8) des gitterartigen Strukturelementes (2, 3) eine im wesentlichen rechteckige Querschnittsform aufweisen.

4. Entkopplungs- und Abdichtungssystem (1) gemäß einem der Ansprüche 2 oder 3, **dadurch gekennzeichnet, daß** die sich kreuzenden Einzelstäbe (7, 8) des gitterartigen Strukturelementes (2, 3) so angeordnet sind, daß eine erste Schicht (2) aus jeweils gleich orientierten Einzelstäben (7) unterhalb einer zweiten Schicht (3) aus dazu in einem Winkel angeordneten, jeweils zueinander gleich orientierten Einzelstäben (8) besteht.

5. Entkopplungs- und Abdichtungssystem (1) gemäß einem der Ansprüche 2 bis **4, dadurch gekennzeichnet, daß** die gitterartige Struktur aus den Einzelstäben (7, 8) eine Rauten-, Rechteck- oder Quadratform aufweist.

6. Entkopplungs- und Abdichtungssystem (1) gemäß einem der Ansprüche 4 oder **5, dadurch gekennzeichnet, daß** die Einzelstäbe (7, 8) der beiden Schichten (2, 3) miteinander im Kreuzungsbereich (9) unter mechanischem Druck verschweißt sind.

7. Entkopplungs- und Abdichtungssystem (1) gemäß einem der Ansprüche 2 bis 6, **dadurch gekennzeichnet, daß** die Einzelstäbe (7, 8) des gitterartigen Strukturelementes (2, 3) zu mindestens an den Kreuzungspunkten (9) zueinander verkippte Kantenbereiche aufweisen, wodurch sich hinterschnittene Abschnitte an den Einzelstäben (7, 8) bilden.

8. Entkopplungs- und Abdichtungssystem (1) gemäß einem der Ansprüche 4 bis 7, **dadurch gekennzeichnet, daß** zwischen jeweils der ersten und der zweiten Schicht (2, 3) aus Einzelstäben (7. 8) eine durchgehende Dampfdruckausgleichsschicht (6) angeordnet ist

9. Entkopplungs- und Abdichtungssystem (1) gemäß Anspruch 8, **dadurch gekennzeichnet, daß** die Dampfdruckausglelchsschicht (6) aus einer Polyethylenfolie gebildet ist.

10. Entkopplungs- und Abdichtungssystem (1) gemäß einem der vorstehenden Ansprüche, **dadurch gekennzeichnet, daß** die Armierungsschicht (5) auf der Verankerungsschicht (2) aufgeschweißt ist.

11. Entkopplungs- und Abdichtungssystem (1) gemäß einem der Ansprüche 1 bis 9, **dadurch gekennzeichnet, daß** die Armierungsschicht (5) auf der Verankerungsschicht (2) aufgeklebt ist.

12. Entkopplungs- und Abdichtungssystem (1) gemäß einem der vorstehenden Ansprüche, **dadurch gekennzeichnet, daß** die Armierungsschicht (5) ein gitterartig gebildetes Gewebe, vorzugsweise ein Glasfasergewebe, aufweist zur sicheren Verankerung mit der oberseitig des Entkopplungs- und Abdichtungssystems (1) einzubringenden Verfüllmasse (12).

13. Entkopplungs- und Abdichtungssystem (1) gemäß einem der vorstehenden Ansprüche, **dadurch gekennzeichnet, daß** die Armierungsschicht (5) sich zu mindestens in einzelnen Randbereichen (14) des Entkopplungs- und Abdichtungssystems (1) über die anderen Schichten (2, 3, 6) hinaus erstreckt, um einen Übergang zu anderen Abschnitten des Entkopplungs- und Abdichtungssystems (1) zu schaffen.

14. Entkopplungs- und Abdichtungssystem (1) gemäß einem der vorstehenden Ansprüche, **dadurch gekennzeichnet, daß** das Entkopplungs- und Abdichtungssystem (1) lose auf einem Untergrund (15) verlegbar ist.

15. Entkopplungs- und Abdichtungssystem (1) gemäß einem der Ansprüche 1 bis 13, **dadurch gekennzeichnet, daß** das Entkopplungs- und Abdichtungssystem (1) fest, vorzugsweise verklebt auf einem Untergrund (15) verlegbar ist.

16. Entkopplungs- und Abdlchtungssystem (1) gemäß einem der Ansprüche 1 bis 15, **dadurch gekennzeichnet, daß** die Polymer-Abdlchtungsschicht (4) aus einer Polyethylen-Abdichtungsschicht gebildet ist.

17. Entkopplungs- und Abdichtungssystem (1) gemäß Anspruch 16, **dadurch gekennzeichnet, daß** die Polymer-Abdichtungsschicht (4) zumindest unterseitig ein Vliesgewebe (13) zur Verankerung mit dem Untergrund (15), vorzugsweise zur Verankerung in dem Kleber aufweist.

18. Entkopplungs- und Abdichtungssystem (1) gemäß einem der vorstehenden Ansprüche, **dadurch gekennzeichnet, daß** die Abdichtungsschicht (4) sich zu mindestens in einzelnen Randbereichen (14') des Entkopplungs- und Abdichtungssystems (1) über die anderen Schichten (2, 3, 5, 6) hinaus erstreckt, um einen feuchtigkeitsundurchlässigen Übergangsbereich zu anderen Abschnitten des Entkopplungs- und Abdichtungssystems (1) zu schaffen.

19. Entkopplungs- und Abdichtungssystem (1) gemäß einem der vorstehenden Ansprüche, **dadurch gekennzeichnet, daß** die Dicke der Verankerungsschicht (2, 3) zwischen 2 und 6 Millimetern beträgt.

20. Entkopplungs- und Abdichtungssystem (1) gemäß einem der vorstehenden Ansprüche, **dadurch gekennzeichnet, daß** die Gesamtdicke des Entkopplungs- und Abdichtungssystems (1) zwischen 2 und 8 Millimetern beträgt.

21. Entkopplungs- und Abdichtungssystem (1) gemäß einem der vorstehenden Ansprüche, **dadurch gekennzeichnet, daß** die Verankerungsschicht (2, 3) nach dem Einbringen der Verfüllmasse (12) im wesentlichen vollständig mit der Verfüllmasse (12) ausgefüllt ist und die in die ausgehärtete Verfüllmasse (12) eingebettete Armierungsschicht (5) eine Versteifungs- und Bewehrungsfunktion für die Abtragung von oberhalb eingeleiteter mechanischer Belastungen erfüllt.

22. Entkopplungs- und Abdichtungssystem (1) gemäß einem der vorstehenden Ansprüche, **dadurch gekennzeichnet, daß** das Entkopplungs- und Abdichtungssystem (1) als Fassadenelement mit Hinterlüftung ausgestaltbar ist.

23. Entkopplungs- und Abdichtungssystem (1) gemäß einem der vorstehenden Ansprüche, **dadurch gekennzeichnet, daß** das Entkopplungs- und Abdlchtungssystem (1) als Dämmelement insbesondere aus Polystyrol ausgestaltbar ist.

## Claims

1. A multilayer decoupling and sealing system (1), in particular for laying ceramic paving (10) by using a thin-bed method (12), with a sealing layer (4) that is impermeable to liquid, in which system (1) above the sealing layer (4) that is impermeable to liquid there is arranged an anchoring layer (2, 3) formed from a lattice-type structural element for incorporating filler material (9) in the region of the upper surface of the decoupling and sealing system (1), which filler material (12) is plastic when being applied and subsequently hardens within the anchoring layer (2, 3), **characterized in that** the sealing layer (4) consists of a non-woven anchoring material or of a polymer sealing layer (4) with non-woven anchoring material arranged on both sides, and that a reinforcing layer (5) is arranged rigidly above the anchoring layer (2, 3), at least in sections.

2. Decoupling and sealing system (1) as defined Claim 1, **characterized in that** the lattice-type structural element (2, 3) is formed from individual rods (7, 8) that are disposed to one another in the manner of a lattice and fixed to one another at the points of intersection (9) of the lattice.

3. Decoupling and sealing system (1) as defined in Claim 2, **characterized in that** the individual rods (7, 8) of the lattice-type structural element (2, 3) are of an essentially rectangular cross section.

4. Decoupling and sealing system (1) as defined in one of the Claims 2 or 3, **characterized in that** the intersecting individual rods (7, 8) of the lattice-type structural element (2, 3) are so arranged that a first layer (2) consists of identically oriented individual rods (7) beneath a second layer of individual rods (8) that are disposed at an angle thereto and are in each instance oriented identically to one another.

5. Decoupling and sealing system (1) as defined in one of the Claims 2 to 4, **characterized in that** the lattice-type structure of the individual rods (7, 8) is in the form of a rhombus, a rectangle, or a square.

6. Decoupling and sealing system (1) as defined in one of the Claims 4 or 5, **characterized in that** the individual rods (7, 8) of the two layers (2, 3) are welded to one another at the points of intersection (9) when under mechanical pressure.

7. Decoupling and sealing system (1) as defined in one of the Claims 2 to 6, **characterized in that** the individual rods (7, 8) of the lattice-type structural element (2, 3) have edge areas that are slanted towards one another, at least at their points of intersection (9), thereby forming undercut sections on the individual rods (7, 8).

8. Decoupling and sealing system (1) as defined in one of the Claims 2 to 7, **characterized in that** a continuous vapour pressure equalizing layer (6) is interposed in each instance between the first and second layer (2, 3) of individual rods (7, 8).

9. Decoupling and sealing system (1) as defined in Claim 8, **characterized in that** the vapour pressure equalizing layer (6) is formed by a polyethylene film.

10. Decoupling and sealing system (1) as defined in one of the preceding claims, **characterized in that** the reinforcing layer (5) is welded onto the anchoring layer (2).

11. Decoupling and sealing system (1) as defined in one of the Claims 1 to 9, **characterized in that** the reinforcing layer (5) is cemented onto the anchoring layer (2).

12. Decoupling and sealing system (1) as defined in one of the preceding claims, **characterized in that** the reinforcing layer (5) is in the form of a lattice-type textile, preferably a glass-fibre textile, to provide for secure anchoring with the filler material (12) that is to be incorporated at the top area of the decoupling and sealing system (1).

13. Decoupling and sealing system (1) as defined in one of the preceding claims, **characterized in that** the reinforcing layer (5) extends beyond the other layers (2, 3, 6) at least in individual edge areas (14) of the decoupling and sealing system (1) so as to create a transition to other sections of the decoupling and sealing system (1).

14. Decoupling and sealing system (1) as defined in one of the preceding claims, **characterized in that** the decoupling and sealing system (1) can be laid so as to float on a substratum (15).

15. Decoupling and sealing system (1) as defined in one of the Claims 1 to 13, **characterized in that** the decoupling and sealing system (1) is laid rigidly, preferably cemented, on a substratum (15).

16. Decoupling and sealing system (1) as defined in one of the Claims 1 to 15, **characterized in that** the polymer sealing layer (4) is formed from a polyethylene sealing layer.

17. Decoupling and sealing system (1) as defined in Claim 16, **characterized in that** the polymer sealing layer has - at least on its underside - non-woven material (13) for anchoring to the substratum (15), preferably for anchoring in the adhesive.

18. Decoupling and sealing system (1) as defined in one of the preceding claims, **characterized in that** the sealing layer (4) extends beyond the other layers (2, 3, 5, 6) of the decoupling and sealing system (1), at least in individual edge areas (14'), so as to create a transition area that is impermeable to liquids to other sections of the decoupling and sealing system (1).

19. Decoupling and sealing system (1) as defined in one of the preceding claims, **characterized in that** the thickness of the anchoring layer (2, 3) is between 2 and 6 mm.

20. Decoupling and sealing system (1) as defined in one of the preceding claims, **characterized in that** the overall thickness of the decoupling and sealing system (1) is between 2 and 8 mm.

21. Decoupling and sealing system (1) as defined in one of the preceding claims, **characterized in that** after the incorporation of the filler material (12), the anchoring layer (2, 3) is essentially completely filled with the filler material (12) and the reinforcing layer (5) that is imbedded in the hardened filler material (12) performs a stiffening and reinforcing function with respect to mechanical loads applied from above.

22. Decoupling and sealing system (1) as defined in one of the preceding claims, **characterized in that** the decoupling and sealing system (1) can be configured as a façade element with than is ventilated from behind.

23. Decoupling and sealing system (1) as defined in one of the preceding claims, **characterized in that** the decoupling and sealing system (1) can be configured as a barrier element, in particular a barrier element that is of polystyrol.

## Revendications

1. Système multicouche de désolidarisation et d'étanchéification (1), en particulier pour la pose de revêtements (10) céramique dans le procédé à lit mince (12), comprenant une couche d'étanchéification (4) imperméable au liquide, une couche d'ancrage (2, 3) formée à partir d'un élément de structure de type grille étant disposée au-dessus de la couche d'étanchéification (4) imperméable au liquide pour l'introduction d'une masse de remplissage (12) à introduire dans la zone du côté supérieur du système de désolidarisation et d'étanchéification (1), plastique lors du traitement et durcissant ensuite à l'intérieur de la couche d'ancrage (2, 3), **caractérisé en ce que** la couche d'étanchéification (4) comprend un non-tissé d'ancrage ou une couche d'étanchéification de polymère (4) avec un non-tissé d'ancrage disposé des deux côtés et **en ce qu'**une couche d'armature (5) est disposée de façon fixe au moins par endroits au-dessus de la couche d'ancrage (2, 3).

2. Système de désolidarisation et d'étanchéification (1) selon la revendication 1, **caractérisé en ce que** l'élément de structure (2, 3) de type grille est formé de barres individuelles (7, 8) disposées à la façon d'une grille en forme de barre les unes par rapport aux autres et fixées les unes aux autres aux points de croisement (9) de la grille.

3. Système de désolidarisation et d'étanchéification (1) selon la revendication 2, **caractérisé en ce que** les barres individuelles (7, 8) de l'élément de structure (2, 3) de type grille présentent une forme de section sensiblement rectangulaire.

4. Système de désolidarisation et d'étanchéification (1) selon l'une quelconque des revendications 2 ou 3, **caractérisé en ce** les barres individuelles (7, 8) qui se croisent de l'élément de structure (2, 3) en forme de grille, sont disposées de telle sorte qu'une première couche (2) comprend des barres individuelles (8) orientées respectivement de façon identique au-dessous d'une seconde couche (3) constituée de barres individuelles (8) disposées les unes par rapport aux autres en formant un angle et orientées à chaque fois dans le même sens les unes par rapport aux autres.

5. Système de désolidarisation et d'étanchéification (1) selon l'une quelconque des revendications 2 à 4, **caractérisé en ce que** la structure en forme de grille constituée des barres individuelles (7, 8) présente une forme de losange, de rectangle ou de carré.

6. Système de désolidarisation et d'étanchéification (1) selon l'une quelconque des revendications 4 ou 5, **caractérisé en ce que** les barres individuelles (7, 8) des deux couches (2, 3) sont soudées les unes avec les autres dans la zone de croisement (9) sous l'effet de pression mécanique.

7. Système de désolidarisation et d'étanchéification (1) selon l'une quelconque des revendications 2 à 6, **caractérisé en ce que** les barres individuelles (7, 8) de l'élément de structure (2, 3) de type grille présentent des zones d'arête basculées les unes par rapport aux autres au moins aux points de croisement (9), de sorte que des parties contre-dépouillées se forment sur les barres individuelles (7, 8).

8. Système de désolidarisation et d'étanchéification (1) selon l'une quelconque des revendications 4 à 7, **caractérisé en ce qu'**une couche d'équilibrage de pression de vapeur (6) continue est disposée entre respectivement la première et la seconde couche (2, 3) à base de barres individuelles (7, 8).

9. Système de désolidarisation et d'étanchéification (1) selon la revendication 8, **caractérisé en ce que** la couche d'équilibrage de pression vapeur (6) est formée à base d'une feuille de polyéthylène.

10. Système de désolidarisation et d'étanchéification (1) selon l'une quelconque des revendications précédentes, **caractérisé en ce que** la couche d'armature (5) est soudée sur la couche d'ancrage (2).

11. Système de désolidarisation et d'étanchéification (1) selon l'une quelconque des revendications 1 à 9, **caractérisé en ce que** la couche d'armature (5) est collée sur la couche d'ancrage (2).

12. Système de désolidarisation et d'étanchéification (1) selon l'une quelconque des revendications précédentes, **caractérisé en ce que** la couche d'armature (5) présente un tissu formé en forme de grille, de préférence un tissu de fibre de verre, pour l'ancrage sûr avec la masse de remplissage (12) à introduire côté supérieur du système de désolidarisation et d'étanchéification (1).

13. Système de désolidarisation et d'étanchéification (1) selon l'une quelconque des revendications précédentes, **caractérisé en ce que** la couche d'armature (5) s'étend au moins dans certaine zones périphériques (14) du système de désolidarisation et d'étanchéification (1) au-delà des autres couches (2, 3, 6), afin de créer une transition avec d'autres parties du système de désolidarisation et d'étanchéification (1).

14. Système de désolidarisation et d'étanchéification (1) selon l'une quelconque des revendications précédentes, **caractérisé en ce que** le système de désolidarisation et d'étanchéification (1) peut être posé de façon libre sur un substrat (15).

15. Système de désolidarisation et d'étanchéification (1) selon l'une quelconque des revendications 1 à 13, **caractérisé en ce que** le système de désolidarisation et d'étanchéification (1) peut être posé de façon fixe, de préférence collé sur un substrat (15).

16. Système de désolidarisation et d'étanchéification (1) selon l'une quelconque des revendications 1 à 15, **caractérisé en ce que** la couche d'étanchéification à base de polymère (4) est formée d'une couche d'étanchéification à base de polyéthylène.

17. Système de désolidarisation et d'étanchéi,fication (1) selon la revendication 16, **caractérisé en ce que** la couche d'étanchéification à base de polymère (4) présente au moins côté inférieur un tissu à base de non-tissé (13) pour l'ancrage avec le substrat (15), de préférence pour l'ancrage dans la colle.

18. Système de désolidarisation et d'étanchéification (1) selon l'une quelconque des revendications précédentes, **caractérisé en ce que** la couche d'étanchéification (4) s'étend dans certaines zones périphériques (14') du système de désolidarisation et d'étanchéification (1) au-delà des autres couches (2, 3, 5, 6), afin de créer une zone de transition imperméable à l'humidité avec d'autres parties du système de désolidarisation et d'étanchéification (1).

19. Système de désolidarisation et d'étanchéification (1) selon l'une quelconque des revendications précédentes, **caractérisé en ce que** l'épaisseur de la couche d'ancrage (2, 3) se situe entre 2 et 6 millimètres.

20. Système de désolidarisation et d'étanchéification (1) selon l'une quelconque des revendications précédentes, **caractérisé en ce que** l'épaisseur globale du système de désolidarisation et d'étanchéification (1) se situe entre 2 et 8 millimètres.

21. Système de désolidarisation et d'étanchéification (1) selon l'une quelconque des revendications précédentes, **caractérisé en ce que** la couche d'ancrage (2, 3) est remplie sensiblement complètement avec la masse de remplissage (12) après l'introduction de la masse de remplissage (11) et la couche d'armature (5) enfoncée dans la masse de remplissage (12) durcie assume une fonction de rigidification et d'armature pour l'enlèvement de sollicitations mécaniques appliquées au-dessus.

22. Système de désolidarisation et d'étanchéification (1) selon l'une quelconque des revendications précédentes, **caractérisé en ce que** le système de désolidarisation et d'étanchéification (1) peut être conçu comme un élément de façade avec ventilation arrière.

23. Système de désolidarisation et d'étanchéification (1) selon l'une quelconque des revendications précédentes, **caractérisé en ce que** le système de désolidarisation et d'étanchéification (1) peut être conçu comme élément isolant, en particulier à base de polystyrène.
